# EUROPÄISCHE PATENTANMELDUNG

(11) **EP 2 218 981 A2**
(43) Veröffentlichungstag der Anmeldung: **18.08.2010**
(21) Anmeldenummer: 09013296.0
(22) Anmeldetag: 21.10.2009
(51) Int. Cl.: F24J 2/52, H01L 31/042

(54) **Montagekonstruktion**

(30) Priorität: 11.02.2009 DE 202009001734 U
(71) Anmelder: Bauersachs, Bernhard, 47139 Duisburg (DE)
(72) Erfinder: Bauersachs, Bernhard, 47139 Duisburg (DE)
(74) Vertreter: DR. STARK & PARTNER

(57) **Zusammenfassung**

Die Erfindung betrifft eine Montagekonstruktion (1) für die mit einem Anstellwinkel α geneigte Anbringung von Fotovoltaikmodulen (2) auf einem Flachdach (6).

Um eine Montagekonstruktion anzugeben, die ohne zusätzliche Auflasten auskommt und mit der auch weitestgehend Befestigungen an der Dachhaut des Flachdachs vermeidbar sind, soll die Montagekonstruktion in der Aufsicht einen rechteckigen Querschnitt haben und ein niedrigeres Vorderteil (3), ein höheres Rückteil (4) sowie zwei oberseitig schräg aufwärts verlaufende Seitenteile (5) umfassen und somit zumindest im Wesentlichen, insbesondere vollständig, umlaufend geschlossen ausgebildet sein, wobei Vorderteil (3), Rückteil (4) und die Seitenteile (5) als flächig ausgebildete Wandelemente ausgebildet sind, an deren jeweiligen Oberseiten das anzubringende Fotovoltaikmodul (2) anschließt oder die anzubringenden Fotovoltaikmodule (2) anschließen.

## Beschreibung

Die Erfindung betrifft eine Montagekonstruktion für die mit einem Anstellwinkel α geneigte Anbringung von Fotovoltaikmodulen auf einem Flachdach.

Aus der Praxis sind derartige Konstruktionen bekannt, die aus rohrförmigen Teilelementen bestehen, auf denen dann die Fotovoltaikmodule angebracht sind.

Nachteilig hierbei ist, dass die Fotovoltaikmodule insoweit dem Wind eine erhöhte Angriffsflächen bieten und eine Sicherung der Montagekonstruktion mit hohem Ballast oder aber aufwändigen Befestigungsmitteln auf dem Flachdach erforderlich ist.

Aufgabe der Erfindung ist es, die vorgenannten Nachteile zu vermeiden und eine Montagekonstruktion anzugeben, die ohne zusätzliche Auflasten auskommt und mit der auch weitestgehend Befestigungen an der Dachhaut des Flachdachs vermeidbar sind.

Diese Aufgabe wird dadurch gelöst, dass eine Montagekonstruktion für die mit einem Anstellwinkel α geneigte Anbringung von Fotovoltaikmodulen auf Flachdächern vorgesehen ist, wobei die Montagekonstruktion in der Aufsicht einen rechteckigen Querschnitt hat und ein niedrigeres Vorderteil, ein höheres Rückteil sowie zwei oberseitig schräg aufwärts verlaufende Seitenteile umfasst und somit zumindest im Wesentlichen, insbesondere vollständig, umlaufend geschlossen ausgebildet ist, wobei Vorderteil, Rückteil und die Seitenteile als flächig ausgebildete Wandelemente ausgebildet sind, an deren jeweiligen Oberseiten das anzubringende Fotovoltaikmodul anschließt oder die anzubringenden Fotovoltaikmodule anschließen. Hierdurch kann der Winddruck nahezu vollständig aufgehoben werden, und der Windsog wird verringert.

Vorzugsweise kann der Anstellwinkel α kleiner als 45°, insbesondere kleiner als 20°, sein, so dass eine möglichst flache Anordnung der Fotovoltaikmodule gegeben ist.

Erfindungsgemäß kann die Montagekonstruktion seitliche Verbindungselemente zum Verbinden seitlich aneinander angrenzender Montagekonstruktionen umfassen, so dass benachbarte Fotovoltaikmodule eine durchgehende Fläche bilden und sowohl eine erhöhte Stabilität durch die Verbindung erzielt wird als auch nur wenige Befestigungen an der Dachhaut des Flachdachs benötigt werden. Dies kann beispielsweise an bereits vorhandenen Befestigungsmöglichkeiten erfolgen. Eine solche Befestigungsmöglichkeit am Baukörper kann beispielsweise durch eine Attika, ein Lichtband, einen Kamin, eine Lichtkuppel oder einen Sekuranten gebildet sein.

Vorteilhafterweise kann die Montagekonstruktion im Wesentlichen, insbesondere vollständig, aus Aluminium oder einer Aluminium-Legierung bestehen, so dass bei geringem Gewicht eine gute Stabilität und eine Unempfindlichkeit gegen Feuchtigkeit und andere Umwelteinflüsse gegeben ist.

Auch kann die Montagekonstruktion unterseitig zumindest in den jeweiligen Eckbereichen auf die Montagekonstruktion unterseitig um einige cm, insbesondere 2 bis 5 cm, vom Flachdach abhebenden Abstandselementen aufliegen, so dass eine gewisse Hinterlüftung des durch die Montagekonstruktion umschlossenen Raums gegeben ist.

Dabei können jeweils zwei Abstandselemente durch einen sich zwischen zwei Eckpunkten erstreckenden Abstandsstreifen gebildet sein, so dass eine einfache Montage möglich ist und eine Hinterlüftung nur in einer durch die Ausrichtung der Abstandsstreifen vorgegebene Richtung möglich ist. Diese Richtung kann entweder parallel zu den Seitenteilen oder aber parallel zu Vorderteil und Rückteil ausgerichtet sein.

Vorzugsweise können die Abstandselemente aus einer Bautenschutzmatte bestehen, so dass zum einen eine gute Verbindbarkeit zu den jeweiligen Kontaktmaterialien (Flachdach bzw. Montagekonstruktion) gegeben ist und zum anderen durch die Nachgiebigkeit des Materials der Bautenschutzmatte ein Schutz vor Beschädigungen an den der Dachhaut des Flachdachs und ggf. auch an der Montagekonstruktion gegeben ist.

Weiterhin kann zumindest ein Fotovoltaikmodul unterseitig zumindest in den jeweiligen Eckbereichen auf das Fotovoltaikmodul unterseitig um einige mm, insbesondere 10 bis 20 mm, von der Montagekonstruktion abhebenden Unterlegelementen aufliegen, so dass so dass eine gewisse Hinterlüftung der Fotovoltaikmodule gegeben ist

Dabei können jeweils zwei Unterlegelemente durch einen sich zwischen zwei Eckpunkten erstreckenden Unterlegstreifen gebildet sein, so dass eine einfache Montage möglich ist und eine Hinterlüftung nur in einer durch die Ausrichtung der Abstandsstreifen vorgegebene Richtung möglich ist. Diese Richtung kann entweder parallel zu den Seitenteilen oder aber parallel zu Vorderteil und Rückteil der Montagekonstruktion ausgerichtet sein.

Vorzugsweise können die Unterlegelemente aus einer Unterlegmatte bestehen, so dass zum einen eine gute Verbindbarkeit zu den jeweiligen Kontaktmaterialien gegeben ist und zum anderen durch die Nachgiebigkeit des Materials der Bautenschutzmatte ein Schutz vor Beschädigungen an den Fotovoltaikmodulen und ggf. auch an der Montagekonstruktion gegeben ist.

Bei einem bevorzugten Ausführungsbeispiel der Erfindung kann zumindest ein Seitenteil mit Aussparungen versehen sein, so dass eine verbesserte Hinter- bzw. Durchlüftung gegeben ist und zudem eine Gewichtsersparnis resultiert.

Auch kann zwischen den Seitenteilen zumindest ein Zwischenelement vorgesehen sein, so dass mehrere schmalere Fotovoltaikmodule nebeneinander auf einer Montagekonstruktion angeordnet sein können.

Weiterhin kann bei zumindest einem Zwischenelement der oberseitige Verlauf entsprechend einem Seitenteil ausgebildet sein, so dass eine Abstützung entsprechend einem Seitenteil erfolgt.

Im Folgenden wird ein in der Zeichnung dargestelltes Ausführungsbeispiel der Erfindung erläutert. Es zeigen:
- Fig. 1: eine Aufsicht von schräg oben auf eine Vielzahl erfindungsgemäßer Montagekonstruktionen,
- Fig. 2: eine Draufsicht auf eine Vielzahl erfindungsgemäßer, auf einem Flachdach angebrachter Montagekonstruktionen, und
- Fig. 3: eine Seitenansicht einer erfindungsgemäßen Montagekonstruktion.

In allen Figuren werden für gleiche bzw. gleichartige Bauteile übereinstimmende Bezugszeichen verwendet.

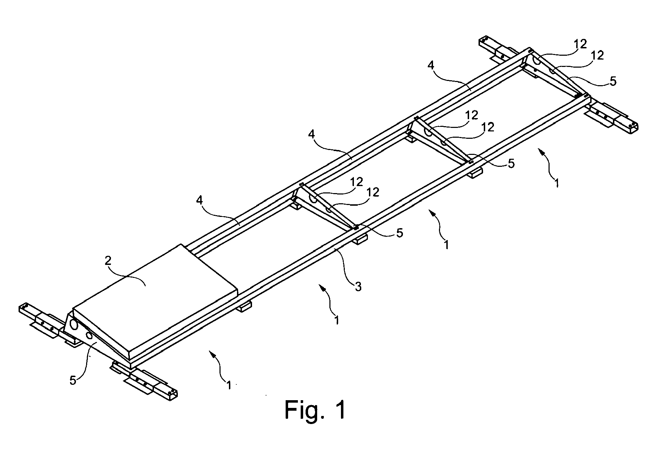

Fig. 1 zeigt eine Aufsicht von schräg oben auf eine Vielzahl erfindungsgemäßer Montagekonstruktionen 1, für die mit einem Anstellwinkel α geneigte Anbringung von Fotovoltaikmodulen 2 auf Flachdächern. Im dargestellten Ausführungsbeispiel ist der besseren Erkennbarkeit wegen lediglich ein Fotovoltaikmodul 2 dargestellt, so dass ansonsten die Montagekonstruktionen 1 sichtbar sind und nicht durch die Fotovoltaikmodule 2 verdeckt werden.

Die Montagekonstruktion 1 hat in der Aufsicht einen rechteckigen Querschnitt, der ein niedrigeres Vorderteil 3, ein höheres Rückteil 4 sowie zwei oberseitig schräg aufwärts verlaufende Seitenteile 5 umfasst.

Das Vorderteil 3, das Rückteil 4 und die Seitenteile 5 sind dabei als flächig ausgebildete Wandelemente ausgebildet, so dass sie eine zumindest im Wesentlichen, insbesondere vollständig, umlaufend geschlossen Wandung der Montagekonstruktion 1 bilden.

An den jeweiligen Oberseiten von dem Vorderteil 3, dem Rückteil 4 und den Seitenteilen 5 schließt sich dann das auf der Montagekonstruktion 1 angebrachte Fotovoltaikmodul 2 an. Durch die insoweit entsprechend einem geschlossenen Kasten ausgebildete Gesamtheit von Montagekonstruktion 1 und Fotovoltaikmodul 2 ist ein rückseitiges Angreifen des Windes nicht möglich und der Windsog wird verringert.

Der Anstellwinkel α ist kleiner als 45°, im dargestellten Ausführungsbeispiel mit ca. 10° sogar kleiner als 20°. Somit ist eine sehr flache Anordnung der Fotovoltaikmodule gegeben, wodurch der Winddruck nahezu vollständig aufgehoben wird.

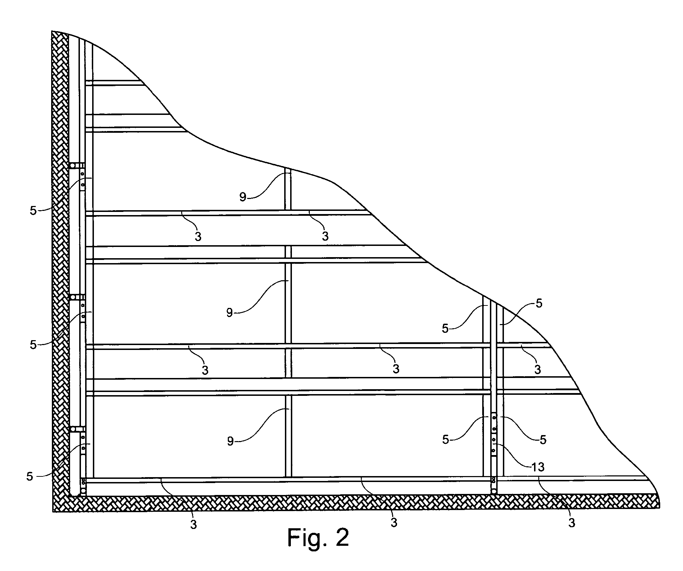

Wie aus Fig. 2 ersichtlich, sind die Montagekonstruktionen 1 auf einem Flachdach 6 angeordnet, wobei für eine ausreichende Sicherung nur wenige Befestigungen 7 an der Dachhaut des Flachdachs 6 erforderlich sind. Diese Befestigungen 7 sind vorliegend am Dachrand 8 des Flachdachs 6 vorgesehen, wobei eine Befestigung auch an anderen Teilen des Flachdachs 6, beispielsweise an einer Attika, einem Lichtband, einem Kamin, einer Lichtkuppel oder einem Sekuranten erfolgen kann.

Die seitlich aneinander angrenzenden Montagekonstruktionen 1 sind jeweils durch Verbindungselemente 13 miteinander verbunden.

Zwischen den Seitenteilen 5 ist jeweils ein Zwischenelement 9 vorgesehen sein, so dass mehrere schmalere Fotovoltaikmodule 2 nebeneinander auf einer Montagekonstruktion 1 angeordnet sein können. Dabei ist der oberseitige Verlauf des Zwischenelementes 9 entsprechend dem oberseitigen Verlauf der Seitenteile 5 ausgebildet, so dass eine Abstützung des oberseitig anzuordnenden Fotovoltaikmoduls 2 nicht nur auf einem Seitenteil 5, sondern auch auf einem Zwischenelement 9 erfolgt.

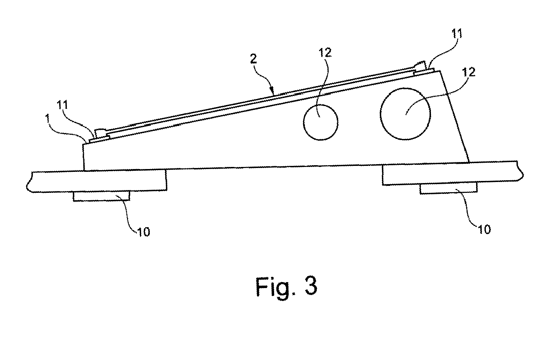

Wie in Fig. 3 erkenntlich, liegt die Montagekonstruktion 1 unterseitig in den jeweiligen Eckbereichen auf Abstandselementen 10 auf, welche die Montagekonstruktion 1 unterseitig um einige cm, insbesondere 2 bis 5 cm, vom Flachdach 6 abheben, so dass eine gewisse Hinterlüftung des durch die Montagekonstruktion 1 umschlossenen Raums gegeben ist.

Auch liegt das Fotovoltaikmodul 2 unterseitig zumindest in den jeweiligen Eckbereichen auf Unterlegelementen 11 auf, welche das Fotovoltaikmodul 2 unterseitig um einige mm, insbesondere 10 bis 20 mm, von der Montagekonstruktion 1 abheben, so dass so dass eine gewisse Hinterlüftung der Fotovoltaikmodule gegeben ist

Wie aus den Figuren 1 und 3 ersichtlich, sind die Seitenteile 5 mit Aussparungen 12 versehen, so dass eine verbesserte Hinter- bzw. Durchlüftung gegeben ist und zudem eine Gewichtsersparnis resultiert.

Genauso sind die Zwischenelemente 9 mit Aussparungen 12 versehen, so dass eine verbesserte Hinter- bzw. Durchlüftung gegeben ist und zudem eine Gewichtsersparnis resultiert.

Die Flächenbelastung durch das gesamte System, bestehend aus den Montagekonstruktionen 1 einschließlich der darauf angeordneten Fotovoltaikmodule 2 beträgt nur ca. 16 kg/m². Die Sturmsicherheit ist bis zu 190 km/h gewährleistet, ohne dass hierfür zusätzliche Auflasten erforderlich wären.

## Patentansprüche

1. Montagekonstruktion (1) für die mit einem Anstellwinkel α geneigte Anbringung von Fotovoltaikmodulen (2) auf einem Flachdach (6), **dadurch gekennzeichnet, dass** die Montagekonstruktion (1) in der Aufsicht einen rechteckigen Querschnitt hat und ein niedrigeres Vorderteil (3), ein höheres Rückteil (4) sowie zwei oberseitig schräg aufwärts verlaufende Seitenteile (5) umfasst und somit zumindest im Wesentlichen, insbesondere vollständig, umlaufend geschlossen ausgebildet ist, wobei Vorderteil (3), Rückteil (4) und die Seitenteile (5) als flächig ausgebildete Wandelemente ausgebildet sind, an deren jeweiligen Oberseiten das anzubringende Fotovoltaikmodul (5) anschließt oder die anzubringenden Fotovoltaikmodule (5) anschließen.

2. Montagekonstruktion (1) nach dem vorhergehenden Anspruch, **dadurch gekennzeichnet, dass** der Anstellwinkel α kleiner als 45°, insbesondere kleiner als 20°, ist.

3. Montagekonstruktion (1) nach einem der vorhergehenden Ansprüche, **dadurch gekennzeichnet, dass** die Montagekonstruktion (1) seitliche Verbindungselemente (13) zum Verbinden seitlich aneinander angrenzender Montagekonstruktionen (1) umfasst.

4. Montagekonstruktion (1) nach einem der vorhergehenden Ansprüche, **dadurch gekennzeichnet, dass** die Montagekonstruktion (1) im Wesentlichen, insbesondere vollständig, aus Aluminium oder einer Aluminium-Legierung besteht.

5. Montagekonstruktion (1) nach einem der vorhergehenden Ansprüche, **dadurch gekennzeichnet, dass** die Montagekonstruktion (1) unterseitig zumindest in den jeweiligen Eckbereichen auf die Montagekonstruktion (1) unterseitig um einige cm , insbesondere 2 bis 5 cm, vom Flachdach (6) abhebenden Abstandselementen (10) aufliegt.

6. Montagekonstruktion (1) nach dem vorhergehenden Anspruch, **dadurch gekennzeichnet, dass** jeweils zwei Abstandselemente (10) durch einen sich zwischen zwei Eckpunkten erstreckenden Abstandsstreifen gebildet sind.

7. Montagekonstruktion (1) nach dem vorhergehenden Anspruch, **dadurch gekennzeichnet, dass** die Abstandselemente (10) aus einer Bautenschutzmatte bestehen.

8. Montagekonstruktion (1) nach einem der vorhergehenden Ansprüche, **dadurch gekennzeichnet, dass** zumindest ein Fotovoltaikmodul (2) unterseitig zumindest in den jeweiligen Eckbereichen auf das Fotovoltaikmodul (2) unterseitig um einige mm, insbesondere 10 bis 20 mm, von der Montagekonstuktion (1) abhebenden Unterlegelementen (11) aufliegt.

9. Montagekonstruktion (1) nach dem vorhergehenden Anspruch, **dadurch gekennzeichnet, dass** jeweils zwei Unterlegelemente (11) durch einen sich zwischen zwei Eckpunkten erstreckenden Unterlegstreifen gebildet sind.

10. Montagekonstruktion (1) nach dem vorhergehenden Anspruch, **dadurch gekennzeichnet, dass** die Unterlegelemente (11) aus einer Unterlegmatte bestehen.

11. Montagekonstruktion (1) nach einem der vorhergehenden Ansprüche, **dadurch gekennzeichnet, dass** zumindest ein Seitenteil (5) mit Aussparungen (12) versehen ist.

12. Montagekonstruktion (1) nach einem der vorhergehenden Ansprüche, **dadurch gekennzeichnet, dass** zwischen den Seitenteilen (5) zumindest ein Zwischenelement (9) vorgesehen ist.

13. Montagekonstruktion (1) nach dem vorhergehenden Anspruch, **dadurch gekennzeichnet, dass** bei zumindest einem Zwischenelement (9) der oberseitige Verlauf entsprechend einem Seitenteil (5) ausgebildet ist.
